# EUROPÄISCHE PATENTANMELDUNG

(11) **EP 1 106 228 A1**
(43) Veröffentlichungstag der Anmeldung: **13.06.2001**
(21) Anmeldenummer: 00126353.2
(22) Anmeldetag: 02.12.2000
(51) Int. Cl.: B01D 35/04, G01F 15/00, G01F 15/06, G01F 15/075, G01F 1/075

(54) **Vorrichtung zur Messung von Wasserdurchflussmengen**

(30) Priorität: 06.12.1999 DE 19958640
(71) Anmelder: Brita GmbH, 65232 Taunusstein (DE)
(72) Erfinder: Malsy, Jürgen, D-63110 Rodgau (DE); Heitele, Bernd, Dr., D-65232 Taunusstein (DE)
(74) Vertreter: Weber, Dieter, Dr.

(57) **Zusammenfassung**

Die vorliegende Erfindung betrifft eine Vorrichtung zur Messung von Wasserdurchflußmengen, insbesondere an einem Wasserfilter, mit mindestens einem Wasserzulauf und mindestens einem Wasserabgang, sowie mit mindestens einer mechanischen Meßvorrichtung für die Messung der die Vorrichtung durchströmenden Wassermenge. Um eine Vorrichtung zur Messung von Wasserdurchflußmengen zu schaffen, die ein wesentlich leichteres Ablesen und eine Kontrolle der Wasserdurchflußmengen ermöglicht, wird erfindungsgemäß vorgeschlagen, daß eine Wandlereinrichtung vorgesehen ist, welche die mechanische Bewegung bzw. Anzeige der mechanischen Meßeinrichtung in elektrische Signale umwandelt.

## Beschreibung

Die vorliegende Erfindung betrifft eine Vorrichtung zur Messung von Wasserdurchflußmengen, insbesondere für Wasserfilter, mit mindestens einem Wasserzulauf und mindestens einem Wasserabgang, sowie mit mindestens einer mechanischen Meßeinrichtung für die die Meßvorrichtung insgesamt durchströmende Wassermenge.

Entsprechende Vorrichtungen sind als sogenannte "Wasseruhren" bereits seit langem bekannt und werden vielfältig im Haushalt und auch in der Industrie benutzt. Ein Nachteil dieser bekannten Wasseruhren besteht jedoch darin, daß sie zumeist an sehr abgelegenen Stellen montiert sind, wo zudem noch schlechte Lichtverhältnisse herrschen, so daß diese Wasseruhren sehr häufig nur schwer ablesbar sind. Dies gilt insbesondere dann, wenn entsprechende Wasseruhren im Bereich einer Wasserfiltervorrichtung montiert sind, um die Menge des einen Filter durchströmenden Wassers zu erfassen, damit der Verbrauch bzw. die Erschöpfung des Filtermaterials anhand der Wassermenge, die den Filter durchströmt hat, abgeschätzt werden kann.

Solche Filtervorrichtungen sind zumeist in Kellerräumen oder aber innerhalb von Schränken oder Gerätegehäusen montiert und zwar im wesentlichen so montiert, daß sie relativ leicht ausgetauscht werden können, aber nicht unbedingt so, daß davor oder dahinter angebrachte Wasseruhren leicht ablesbar wären.

Gegenüber diesem Stand der Technik liegt der vorliegenden Erfindung die Aufgabe zugrunde, eine Vorrichtung zur Messung von Wasserdurchflußmengen zu schaffen, die ein wesentlich leichteres Ablesen und eine Kontrolle der Wasserdurchflußmengen ermöglicht.

Diese Aufgabe wird dadurch gelöst, daß in bzw. an der Vorrichtung eine Wandlereinrichtung vorgesehen ist, welche die mechanische Bewegung bzw. Anzeige der mechanischen Meßeinrichtung in elektrische Signale umwandelt. Auf diese Weise können die elektrischen Signale als für die Durchflußmengen repräsentativ erfaßt und auf einer entsprechenden elektrischen Anzeigeeinrichtung angezeigt werden, die nicht in so fester räumlicher Beziehung zu der mechanischen Meßvorrichtung stehen muß, wie dies bei herkömmlichen Wasseruhren der Fall ist. Insbesondere kann die Anzeigeeinrichtung an der Meßvorrichtung eine Orientierung aufweisen, die unabhängig von der Orientierung etwaiger Wasserzugangs- und Abgangsanschlüsse ist.

Für die Beschreibung und Darstellung der vorliegenden Erfindung und bevorzugter Ausführungsformen derselben wird Bezug genommen auf drei weitere, gleichzeitig eingereichte Patentanmeldungen derselben Anmelderin, die auf ihrem jeweiligen Deckblatt mit den internen Zeichen NE-70, NE-71 und NE-72 bezeichnet sind. Der Inhalt dieser Anmeldungen soll die vorliegende Anmeldung ergänzen, soweit einzelne Merkmale hier nicht ausdrücklich beschrieben sind.

In einer bevorzugten Ausführungsform der vorliegenden Erfindung ist vorgesehen, daß die elektrische Anzeigevorrichtung mit der Meßvorrichtung über einen Stecker verbunden ist, wobei vorzugsweise auch ein Verlängerungskabel bereitgestellt werden kann, welche die Steckvorrichtung, die an der Meßvorrichtung fest angebracht ist, mit der an der Anzeigeeinrichtung vorgesehenen, komplementären Steckverbindung verbindet, so daß die Anzeigeeinrichtung auch in erheblichem Abstand von der eigentlichen Meßvorrichtung angebracht werden kann. Zweckmäßigerweise ist ein Mikroprozessor vorgesehen, welcher die elektrischen Signale der Wandlereinrichtung in konkrete Mengen- bzw. Volumenwerte in üblichen Einheiten (Kubikzentimeter, Liter, Kubikmeter) umsetzt, so daß der angegebene Zahlenwert unmittelbar die Anzahl entsprechender Volumeneinheiten wiedergibt.

Insbesondere für die Verbindung mit einem Wasserfilter ist die erfindungsgemäße Vorrichtung in einer bevorzugten Ausführungsform dahingehend ausgestaltet, daß sie neben dem bereits erwähnten ersten Zulauf und dem ersten Abgang für Wasser noch mindestens einen zweiten Zulauf und einen zweiten Abgang aufweist, wobei der erste Zulauf mit einer Wasserzufuhrleitung, z.B. einer normalen Trinkwasserleitung verbunden wird, der mit diesem ersten Zulauf in Verbindung stehende erste Abgang mit der Eingangsseite eines Wasserfilters verbunden wird, weiterhin der zweite Wasserzulauf der Vorrichtung mit der Ausgangsseite des Wasserfilters verbunden wird und schließlich der zweite Abgang, der mit dem zweiten Zulauf verbunden ist, mit der Abgangsseite der Wasserleitung verbunden wird.

Dabei kann weiterhin noch eine Aufteilung der von der Wasserleitung eingehenden Wasserströme vorgesehen werden, indem der erste Wasserzulauf z.B. über ein Ventil den eingehenden Wasserstrom in zwei Teilströme aufspaltet, so daß dementsprechend zwei getrennte erste Wasserabgänge mit dem ersten Wasserzulauf verbunden sind. Diese getrennten ersten Wasserabgänge können mit unterschiedlichen Anschlußelementen auf der Eingangsseite des Wasserfilters verbunden werden, so daß die beiden Teilströme auch unterschiedliche Filterstrecken durchlaufen können. Nähere Einzelheiten einer solchen getrennten Wasserzufuhr für verschiedene Filterstrecken eines Wasserfilters sind aus der gleichzeitig eingereichten Patentanmeldung derselben Anmelderin zu entnehmen, die sich mit einer entsprechenden Aufteilung der Filterströme befaßt.

Bei einer solchen Ausführungsform ist es insbesondere zweckmäßig, wenn die Vorrichtung zwei getrennte mechanische Meßeinrichtungen enthält, die jeweils mit entsprechenden Wandlereinrichtungen zur Umwandlung in elektrische Signale versehen sind, wobei mindestens eines der mechanischen Meßgeräte mindestens einen der beiden Teilströme des aufgeteilten ersten Wasserzulaufes erfaßt. Die andere mechanische Meßeinrichtung kann entweder den zweiten, parallelen Teilstrom erfassen oder aber den Rückstrom zwischen dem zweiten Wasserzulauf und dem zweiten Wasserabgang. Im ersten Fall ergibt sich die gesamte, den Filter durchströmende Wassermenge als Summe der beiden Teilströme und im zweiten Fall ergibt sich der zweite, nicht direkt gemessene Teilstrom als Differenz aus der Gesamtmenge und dem ersten Teilstrom.

Die Aufteilung der Teilströme erfolgt zweckmäßigerweise über ein Ventil, welches in die Meßvorrichtung integriert ist und welches vorzugsweise von außen einstellbar ist.

Die zugehörige Anzeigevorrichtung weist dementsprechend mindestens eine Anzeige für die Gesamtmenge des hindurchströmenden Wassers und mindestens eine Anzeige für einen Teilstrom oder aber für den Bruchteil eines Teilstromes im Verhältnis zur Gesamtmenge oder im Verhältnis zu dem zweiten Teilstrom auf.

Es versteht sich, daß eine solche Meßvorrichtung, die unabhängig zwei verschiedene Wasserströme innerhalb derselben Meßvorrichtung erfaßt, wobei sich ein dritter Wasserstrom vorzugsweise als Summe oder Differenz der gemessenen Ströme ergibt, auch ohne Wandlereinrichtung als Gegenstand der vorliegenden Erfindung angesehen werden kann.

Eine Messung des Gesamtstromes und eines Teilstromes kann zum Beispiel auch einer Leckageüberwachung dienen., da zum Beispiel ein Teilstrom, der größer als der Gesamtstrom ist, offensichtlich ein Indiz für ein Leck ist, sofern ein Defekt der Meßgeräte ausgeschlossen werden kann.

In einer bevorzugten Ausführungsform der Erfindung sind der erste Wasserzulauf und der zweite Wasserabgang vorzugsweise auf derselben Seite des Gerätes, und z.B. parallel im Abstand zueinander angeordnet, so daß sie beide getrennt mit entsprechenden Anschlüssen einer Wasserleitung verbunden werden können. Der erste Wasserabgang, der auch aus zwei getrennten ersten Wasserabgängen bestehen kann, sowie der zweite Wasserzulauf, sind vorzugsweise konzentrisch zueinander angeordnet und sie sind mit entsprechenden Strömungsführungseinrichtungen bzw. -rohren verbunden, die dafür sorgen, daß das Wasser des einen Teilstroms, das heißt des ersten Wasserabganges, eine andere Filterstrecke durchläuft als der Teilstrom aus dem anderen ersten Wasserabgang. Es versteht sich, daß die Strömungswege auch ebensogut umgekehrt werden könnten, ohne daß sich an dem Filterprinzip dabei irgend etwas ändern würde.

Das erfindungsgemäße Meßgerät ist in einer bevorzugten Ausführungsform auch in der Lage, die aktuelle Filterkapazität zu berechnen und gegebenenfalls anzuzeigen, und zwar unabhängig von dem Gesamtstrom und der Gesamtmenge des Schnittwassers. Hierzu muß nur die bekannte Rohwasserhärte eingegeben bzw. eingestellt werden, so daß die Meßelektronik bzw. ein integrierter Mikrochip aus der Menge des enthärteten Teilstroms und der Rohwasserhärte die gewünschten Kapazitätsdaten ermitteln kann. Das Meßgerät kann dann auch eine bevorstehende oder erreichte Erschöpfung des lonenaustauschers anzeigen und gegebenenfalls ein optisches und/oder akustisches Warnsignal ausgeben.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen Schnitt durch eine Wasserfiltervorrichtung mit der hier nur schematisch angedeuteten Vorrichtung 5 gemäß der vorliegenden Erfindung,
- Figur 2: eine perspektivische Ansicht des äußeren Gehäuses der erfindungsgemäßen Vorrichtung, die aus einer Armatur mit integrierter Meßeinrichtung und einem separaten, abnehmbaren Anzeigeteil besteht und
- Figur 3: einen Schnitt durch die Vorrichtung zur Darstellung des inneren Aufbaus derselben, und
- Figur 4: eine weitere alternative Ausführungsform eines Außenbehälters mit eingesetztem Innenbehälter und aufgesetztem Deckel.

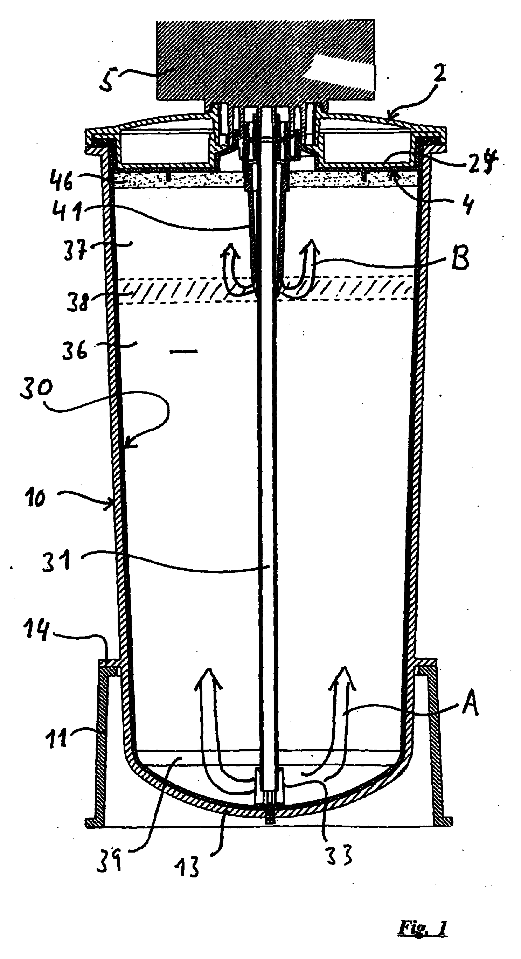

Man erkennt in Figur 1 einen Längsschnitt durch einen Druckwasserfilter mit einer aufgesetzten Vorrichtung 5 zur Aufteilung und Messung der verschiedenen, durch den Filter hindurchgehenden Wasserströme. Insbesondere erkennt man einen Druckbehälter 10 mit einer inneren Auskleidung bzw. einem inneren Behälter 30, in dem im unteren Bereich ein Filtermaterial 36 und im oberen Bereich ein Filtermaterial 37 aufgenommen sind, die durch eine poröse und vorzugsweise elastische Schicht 38 voneinander getrennt sind. Das Filtermaterial 36 wird am unteren Ende durch eine wasserdurchlässige Rückhalteplatte 39 begrenzt, unter der sich ein Verteilerraum befindet, in dem sich das durch das zentrale Rohr 31 zufließende Wasser eines Hauptstromes verteilt. Der Druckbehälter 10 weist einen Boden 13, einen Standfuß 11 und einen auf dem Standfuß 11 sich abstützenden Flansch 14 auf. Verteilerelemente 33 stützen das Rohr am Boden 13 bzw. der inneren Auskleidung ab und sorgen für eine gleichmäßige Verteilung des Hauptstromes unterhalb der Trenn- bzw. Rückhalteplatte 39. Weitere Details des Druckbehälters 10 und der Innenverkleidung 30, sowie die Ausgestaltung der zugehörigen Deckel 2 und 4 dieser Behälter sind aus einer gleichzeitig eingereichten weiteren Anmeldung derselben Anmelderin zu entnehmen.

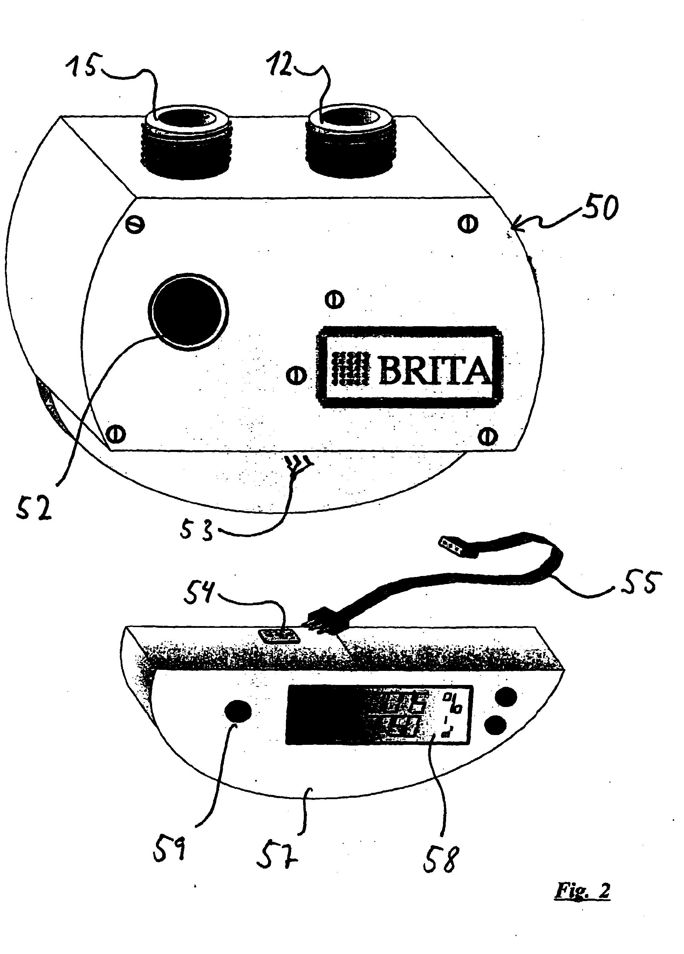

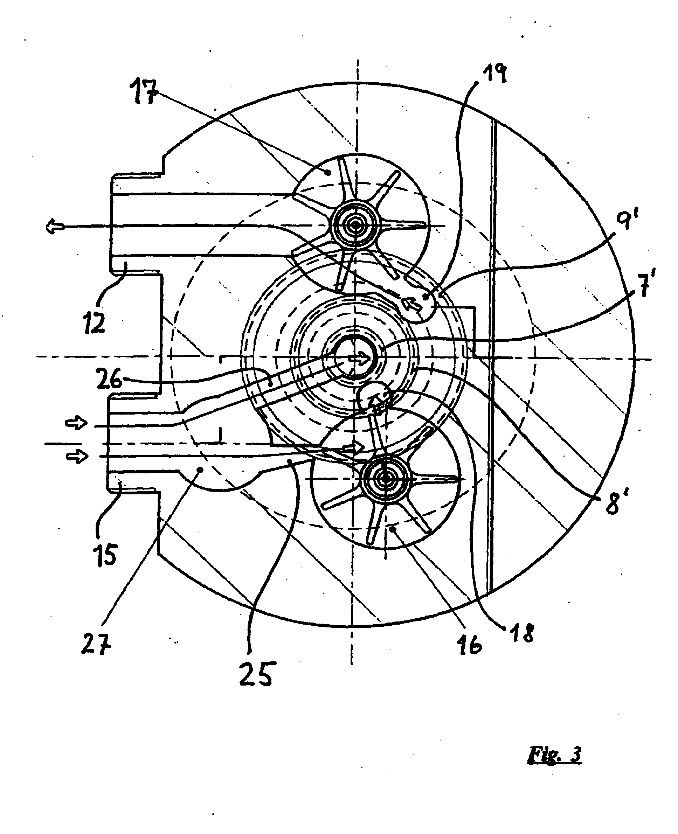

In Figur 2 erkennt man ein teilweise zylindrisches Gehäuse 50, das an zwei gegenüberliegenden Längsseiten abgeflacht bzw. ausgeklinkt ist. Auf der einen abgeflachten Seite sind zwei Gewindestutzen parallel und im Abstand zueinander angeordnet, die einen ersten Wasserzulauf 15 und einen zweiten Wasserabgang 12 bilden. Weiterhin erkennt man außen am Gehäuse und in der Verlängerung des Wasserzuganges 15 noch einen Ventilbetätigungsknopf 52, durch dessen Drehen das Verhältnis zweier Teilströme eingestellt werden kann, in die die durch den Wasserzulauf 15 zugeführte Wassermenge aufgeteilt werden kann. Nähere Einzelheiten hierzu ergeben sich aus Figur 3.

Die von internen mechanischen Zählvorrichtungen 16, 17 (siehe Figur 3) erfaßten Wasserdurchflußmengen werden durch die erfindungsgemäßen Wandlervorrichtungen in elektrische Signale umgesetzt, die über Steckkontakte 53, 54 abgegriffen werden können. Dabei kann in dem Gehäuse 50 neben der mechanisch-elektrischen Wandlereinrichtung noch ein entsprechender Verstärker und gegebenenfalls auch ein Mikroprozessor untergebracht sein, der entsprechend einer vorgegebenen Programmierung die gemessenen und verstärkten elektrischen Signale in der Weise umformt, daß sie entweder analogen oder digitalen Werten entsprechen, die unmittelbar die Durchflußmengen in üblichen Einheiten, wie z.B. Kubikzentimeter, Liter oder Kubikmeter repräsentieren. Die Anzeigeeinheit 57 weist eine entsprechende Steckverbindung 54 auf, so daß die Anzeigeeinheit 57 unmittelbar auf das Gehäuse 50 der Meßvorrichtung aufgesteckt werden kann. Dazu wird jedoch nicht die in Figur 2 sichtbare Steckverbindung 54 benutzt, sondern eine weitere, demgegenüber um 90° auf die nicht sichtbare Seite der Anzeigevorrichtung 57 versetzte Steckverbindung, so daß die Zylinderabschnittsform der Anzeigevorrichtung 57 die zylindrische Form des Gehäuses 50 ergänzt, wenn sie in die entsprechende Ausklinkung des Gehäuses 50 eingesetzt ist, die man in Figur 2 und auch in Figur 3 erkennt. Die Steckverbindung 54 ist parallel geschaltet und wird verwendet für die Verbindung mit Hilfe eines Verlängerungskabels 55, welches im Prinzip beliebig lang sein kann, so lange die Signale nicht aufgrund der Kabellänge zu stark abgeschwächt werden. Die Anzeigeeinheit 57 weist ein Display 58 und Bedienelemente 59, z.B. einen Rückstellknopf auf, wobei das Display hier nur schematisch zwei Werte wiedergibt, die z.B. einer Gesamtdurchflußmenge und dem prozentualen Anteil eines der Teilströme entsprechen. Es versteht sich, daß noch weitere Zahlenwerte erfaßt und angezeigt werden könnten, z.B. eine nicht rückstellbare Anzeige für die Gesamtmenge des durch die Meßvorrichtung hindurchgeströmten Wassers sowie eine rückstellbare Anzeige für die Gesamtmenge des Wassers, die seit dem letzten Filterwechsel hindurchgeströmt ist. Wahlweise könnten auch die Verbindungselemente zwischen dem Gehäuse 50 und dem Filtergehäuse oder anderen Verbindungsteilen mit entsprechenden Kontakten ausgestattet sein, die automatisch eine Rückstellung der Anzeige der seit dem letzten Filterwechsel hindurchgeströmten Wassermenge bewirkt. Weiterhin kann die Anzeigeeinheit oder aber auch die Meßvorrichtung selbst einen Speicher für frühere, inzwischen rückgestellte Meßwerte und Strömungsmengen sowie Strömungsanteile haben, wobei die Speicherwerte mit Hilfe der Bedienelemente 59 abrufbar sind.

Figur 3 zeigt den inneren Aufbau der Meßvorrichtung, jedoch ohne die Wandlereinrichtung zur Erzeugung der elektrischen Signale. Die Wandlereinrichtung könnte z.B. elektromagnetisch funktionieren, indem die einzelnen Flügel der Zellräder 16, 17 ganz oder teilweise aus metallischem bzw. magnetischem Material bestehen und eine entsprechende Sonde außen am Rand der Zellräder 16, 17 auf diese Weise die sich vorbeibewegenden Flügel zählt, wobei selbstverständlich auch nur einer oder zwei oder ein beliebiger Anteil der Flügel mit einem entsprechenden magnetischen oder metallischen Element ausgestattet sein kann. Selbstverständlich sind auch viele andere Wandlereinrichtungen denkbar, mit Hilfe derer die mechanische Drehung der Zellräder 16, 17 in elektrische Signale umgesetzt werden könnten.

Gegenüber von den beiden Wasserzugangs- und Wasserabgangsanschlüssen 15, 12 erkennt man noch die Ausklinkung des zylindrischen Gehäuses, in welche die Anzeigeeinheit 57 eingesetzt werden kann, um auf dieser Seite die Zylinderform des Gehäuses 50 zu ergänzen.

Zentrale bzw. ringförmige Kanäle 7, 8 und 9 und entsprechende Rohransätze 7', 8' und 9', die oben in Figur 1 ohne Bezugszeichen erkennbar sind, sind in einer Draufsicht nochmals hinter der Schnittebene gemäß Figur 3 zu erkennen, die einen horizontalen Schnitt durch die in Figur 1 nur schematisch angedeutete Armatur 5 zeigt, die eine integrierte Meßvorrichtung enthält. Zunächst erkennt man im linken Teil der Figur 3 zwei Gewindestutzen 12 und 15, die mit Hilfe von Dichtungen und Überwurfmuttern mit entsprechenden Druckwasseranschlüssen verbunden werden, wobei der Gewindestutzen 15 mit der Druckwasserzufuhr verbunden wird und der Gewindestutzen 12 mit einer entsprechenden Entnahmeleitung verbunden ist.

Unmittelbar auf den Druckwasseranschluß 15 folgt ein Ventil 27, welches von außen über ein kleines Handrad oder dergleichen einstellbar ist und auf diese Weise das durch den Druckwasseranschluß 15 zuströmende Rohwasser auf den Hauptstromkanal 26 und den Teilstromkanal 25 verteilt, wobei das Aufteilungsverhältnis im Prinzip beliebig eingestellt werden kann, die Armatur jedoch vorzugsweise dafür ausgelegt ist, daß der größere Teil des Rohwassers durch den Hauptstromkanal 26 fließt. Dieser Hauptstromkanal 26 ist unmittelbar mit dem zentralen Kanal 7 verbunden, der in Verbindung mit Figur 2 beschrieben wurde. Der zentrale Kanal 7 ist von dem Figur 3 nur gestrichelt angedeuteten und hinter der Papierebene liegenden Rohransatz 7' gebildet.

Der Teilstrom wird über den Teilstromkanal 25 abgezweigt und führt zunächst durch einen Strömungsmengenmesser 16 in Form eines Zellrades. Von dort gelangt der Teilstrom in einen Zufuhrkanal 18, der in Verbindung mit dem ringförmigen Kanal 8 steht, der sich durch den Ringraum zwischen dem Rohransatz 7' und dem Rohransatz 8' ergibt, welcher in Figur 3 ebenfalls gestrichelt angedeutet ist. Dieser Rohransatz 8' ist wiederum von einem weiteren Rohransatz 9' konzentrisch umgeben, der den ringförmigen Kanal 9 von außen einschließt und von diesem ringförmigen Kanal 9 geht wiederum axial ein Kanal 19 aus, der über einen weiteren Strömungsmengenmesser in Form eines Zellrades 17 mit dem Wasserabgang 12 verbunden ist.

Bei dieser Anordnung wird über das Zellrad 17 die Gesamtmenge des die Filtervorrichtung durchströmenden Wassers erfaßt, während das Zellrad 16 die Menge des Teilstromes durch den Kanal 25 erfaßt, so daß sich die Menge des durch den Hauptstromkanal 26 strömenden Wassers als Differenz des rückströmenden gefilterten Wassers und des abgezweigten Teilstromes ergibt.

Die Anzahl der Umdrehungen der Zellräder in den beiden Strömungsmengenmessem 16 und 17 ist proportional zu der hindurchgeströmten Wassermenge und wird vorzugsweise durch entsprechende Encoder elektrisch erfaßt und mit Hilfe einer elektronischen Meßvorrichtung angezeigt, die wiederum Gegenstand einer gleichzeitig eingereichten, getrennten Anmeldung derselben Anmelderin ist.

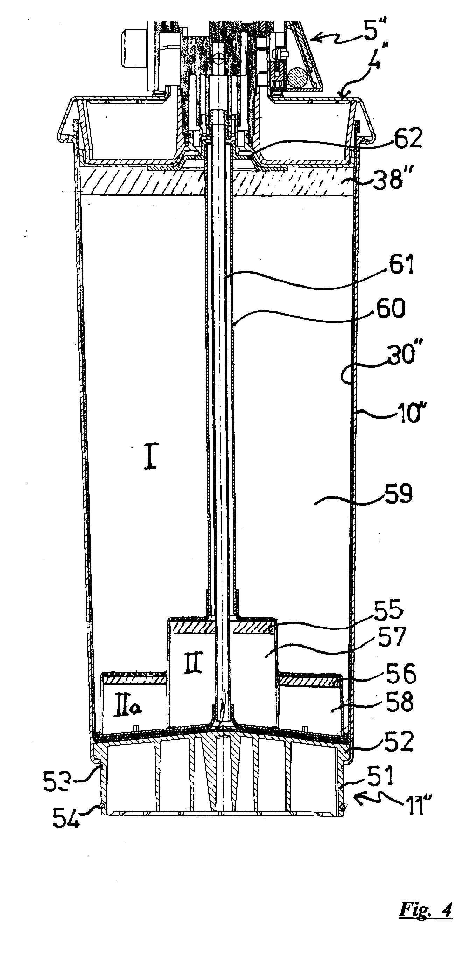

Figur 4 zeigt eine weitere, alternative Ausführungsform der vorliegenden Erfindung. Auch in diesem Fall ist ein Innenbehälter 30" in enger Passung in einen leicht konischen Außenbehälter 10" eingesetzt, wobei die Wandung des Außenbehälters aus einem hinreichend druckfesten Material besteht, wohingegen das Wandmaterial des Innenbehälters 30" gegebenenfalls dünner und auch aus einem weniger stabilen Material hergestellt sein kann, obwohl auch für den Innenbehälter zumindest eine gewisse Formstabilität gegeben sein sollte, solange er nicht unter Druck gesetzt wird.

Im Unterschied zu den vorher beschriebenen Ausführungsformen ist jedoch bei der Ausführungsform gemäß Figur 4 eine sehr große Bodenöffnung vorgesehen, die fast den gesamten Querschnitt im unteren Bereich des Außenbehälters 10" umfaßt, und in welche ein Bodeneinsatz 11" passend eingesetzt ist. Die Öffnung ist kreisförmig und der Innendurchmesser der Öffnung entspricht dem Außendurchmesser eines zylindrischen Fußteiles 51 des Bodeneinsatzes 11", welches nach oben hin nochmals durch einen Ansatz 52 stufenförmig erweitert ist, wobei der stufenförmige Ansatz 52 mit seinem Durchmesser auf den Innendurchmesser im unteren Bereich des Außenbehälters 10" abgestimmt ist, so daß Bodeneinsatz 11" und Außenbehälter 10" zusammen einen unten dicht und lückenlos geschlossenen Hohlraum bilden, in welchen der Innenbehälter 30" eingesetzt werden kann. In diesem Fall ist allerdings der Boden, das heißt die obere Fläche des Bodeneinsatzes 11" aus der Sicht des Behälters 10" leicht konkav ausgebildet. Auch hinsichtlich einiger weiterer Merkmale unterscheidet sich diese Ausführungsform von den zuvor beschriebenen Ausführungsformen. Der Deckel hat im wesentlichen die Form eines Ringes mit kastenförmigem Querschnitt, was noch weitgehend ähnlich zu dem Querschnitt des Deckels der vorher beschriebenen Ausführungsformen ist. Allerdings weist der Behälter keinen Flanschrand auf, sondern am oberen Rand des Behälters sind, ebenso wie am Außenrand des Deckels 4", Verschlußelemente vorgesehen, die hier nur angedeutet sind und die Form eines Bajonettverschlusses haben. In die innere Öffnung des Deckels 4" ist eine Armatur 5" eingesetzt, durch welche Wasser unter Druck von oben in die Filterkammern l und II bzw. lla eingeleitet wird. Hierzu ist in dem Armaturenkopf 5" ein Verzweigungsventil vorgesehen, welches einen Teil des Wassers durch ein zentrales Außenrohr 60 abwärts leitet, in welchem noch ein inneres Steigrohr 61 konzentrisch angeordnet ist. Ein weiterer Teil des Wassers wird durch das Verzweigungsventil auf eine obere Verteilerplatte 62 geleitet, die das dort eintretende Wasser im wesentlichen gleichmäßig über den gesamten Querschnitt des Behälters verteilt. In dem Filterraum list im wesentlichen ein lonenaustauscherharz 59 angeordnet, während in den Filterräumen II und lla im wesentlichen Aktivkohle vorgesehen ist, wobei selbstverständlich auch andere Filtermaterialien verwendet werden könnten. Der Teil des Wassers, welcher durch das äußere Fallrohr 60 abwärts strömt, wird nur durch den Filterraum II geleitet, in welchem Aktivkohle vorhanden ist und gelangt von unten durch eine Siebplatte zu der Eintrittsöffnung des zentralen Steigrohrs 61. Derjenige Teil des Wassers, welcher durch den Filterraum l und das lonenaustauscherharz 59 geleitet wird, tritt im unteren Bereich durch eine mit Öffnungen versehene obere Platte in den Filterraum lla ein, und an der Unterseite dieses Filterraumes lla durch eine Siebplatte wieder aus, vermischt sich mit dem aus dem Filterraum l austretenden Wasser und strömt ebenfalls durch das Steigrohr 61 nach oben. Es versteht sich, dass die zu dieser Ausführungsform gehörige Armatur im Vergleich zu der in den Figuren 1 - 3 beschriebenen Ausführungsform der Umkehr der Fließrichtung und der Vertauschung von Zuflüssen und Abflüssen gegebenenfalls angepasst ist, falls dies erforderlich scheint.

Die Filtermaterialien 57 und 58 sind, wie bereits erwähnt, Aktivkohle. Auf diese Weise wird ein Teil des Wassers, welches nur durch den Filterraum II hindurchtritt, ausschließlich durch Aktivkohle gefiltert und gegebenenfalls auch entkeimt, wohingegen der andere Teil des Wassers, der durch den Filterraum l und den Filterraum lla strömt, sowohl enthärtet wird als auch durch Aktivkohle gefiltert und gegebenenfalls entkeimt bzw. keimreduziert wird.

Die Rolle eines Ausgleichselementes wird von Vliespackungen erfüllt, die im oberen Bereich des Filterraumes 1 angeordnet sind und mit 38" bezeichnet sind, wobei entsprechende Vliese auch in den Filterräumen II und lla angeordnet sein können, die dort mit 55 und 56 bezeichnet sind. Insbesondere das Vliesmaterial 38" ist vorzugsweise elastisch nachgiebig, so daß es Volumenänderungen des im Bereich l vorhandenen Filtermaterials 59 ausgleichen kann, die bei lonenaustauscherharz auftreten können, wenn dieses zunächst im trockenen Zustand ist und erstmalig befeuchtet wird.

## Patentansprüche

1. Vorrichtung zur Messung von Wasserdurchflußmengen, insbesondere an einem Wasserfilter, mit mindestens einem Wasserzulauf und mindestens einem Wasserabgang, sowie mit mindestens einer mechanischen Meßvorrichtung für die Messung der die Vorrichtung durchströmenden Wassermenge, **dadurch gekennzeichnet, daß** eine Wandlereinrichtung vorgesehen ist, welche die mechanische Bewegung bzw. Anzeige der mechanischen Meßeinrichtung in elektrische Signale umwandelt.

2. Vorrichtung nach Anspruch 1, dadurch gekennzeichnet, daß ein Mikroprozessor vorgesehen ist, welcher so programmiert ist, daß er die elektrischen Signale der Wandlereinrichtung in Zahlenwerte umsetzt, die üblichen Volumeneinheiten entsprechen.

3. Vorrichtung nach Anspruch 1 oder 2, dadurch gekennzeichnet, daß eine Anzeigevorrichtung zur visuellen Anzeige der gemessenen Durchflußmengen vorgesehen ist.

4. Vorrichtung nach Anspruch 3, dadurch gekennzeichnet, daß die Anzeigeeinrichtung von der Vorrichtung abnehmbar und mit dieser über einen elektrischen Anschlußstecker verbindbar ist.

5. Vorrichtung nach Anspruch 4, dadurch gekennzeichnet, daß ein Verlängerungskabel vorgesehen ist, welches in den Anschlußstecker des Meßgerätes mit dem entsprechenden Anschlußstecker bzw. -buchse in der Anzeigeeinrichtung verbindet.

6. Vorrichtung nach einem der Ansprüche 1 bis 5, dadurch gekennzeichnet, daß mindestens ein zweiter Wasserzulauf und ein zweiter Wasserabgang vorgesehen ist.

7. Vorrichtung nach Anspruch 6, dadurch gekennzeichnet, daß der erste Wasserzulauf in zwei Teilströme aufteilbar ist.

8. Vorrichtung nach Anspruch 7, dadurch gekennzeichnet, daß mindestens zwei mechanische Meßeinrichtungen und entsprechende Wandlereinrichtungen vorgesehen sind, wobei mindestens eine der beiden mechanischen Meßvorrichtung die Durchflußmenge für einen der beiden Teilströme des ersten Wasserzulaufs mißt.

9. Vorrichtung nach Anspruch 6 oder 7, dadurch gekennzeichnet, daß der erste Wasserzulauf und der zweite Wasserabgang auf derselben Seite der Vorrichtung angeordnet sind.

10. Vorrichtung nach einem der Ansprüche 6 bis 8, dadurch gekennzeichnet, daß der erste Wasserabgang und der zweite Wasserzulauf auf derselben Seite der Vorrichtung angeordnet sind.

11. Vorrichtung nach Anspruch 10, dadurch gekennzeichnet, daß der zweite Wasserzulauf und der erste Wasserabgang konzentrisch zueinander angeordnet sind.

12. Vorrichtung nach Anspruch 7 und nach Anspruch 9 oder 10, dadurch gekennzeichnet, daß nach der Aufteilung des ersten Wasserzulaufs zwei getrennte, erste Wasserabgänge auf derselben Seite der Vorrichtung vorgesehen und beide konzentrisch zueinander sowie vorzugsweise konzentrisch zu dem zweiten Wasserzulauf angeordnet sind.

13. Vorrichtung nach einem der Ansprüche 1 bis 12, dadurch gekennzeichnet, daß als mechanische Meßvorrichtungen Zellräder vorgesehen sind.

14. Vorrichtung nach einem der Ansprüche 1 bis 13, dadurch gekennzeichnet, daß sie als Armatur für eine Druckwasserleitung zur Verbindung mit einem Großgerätewasserfilter ausgebildet ist, wobei der erste Wasserabgang für die Verbindung mit der Eingangsseite des Filters vorgesehen ist und der zweite Wasserzulauf für die Verbindung mit der Ausgangsseite des Wasserfilters vorgesehen ist.

15. Vorrichtung nach Anspruch 14, dadurch gekennzeichnet, daß zwei getrennte erste Wasserabgänge für die Durchströmung unterschiedlicher Filterstrecken vorgesehen sind, wobei mindestens einer der Teilströme des ersten Wasserabganges durch eine mechanische Meßvorrichtung erfaßt wird.
